Europäisches Patentamt

European Patent Office

Office européen des brevets

(19)

(11) **EP 1 279 937 A1**

(12) **EUROPEAN PATENT APPLICATION**

(43) Date of publication:
**29.01.2003 Bulletin 2003/05**

(51) Int Cl.⁷: **G01K 7/02**, G01K 3/10,
G01N 25/20

(21) Application number: **01810731.8**

(22) Date of filing: **24.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ABB RESEARCH LTD.**
**8050 Zürich (CH)**

(72) Inventors:
• **Gallestey, Eduardo**
**5522 Tägerig (CH)**

• **Stothert, Alec**
**5408 Ennetbaden (CH)**
• **Morton, Steve**
**5432 Neuenhof (CH)**

(74) Representative: **ABB Patent Attorneys**
**c/o ABB Schweiz AG**
**Brown Boveri Strasse 6**
**5400 Baden (CH)**

(54) **Fast temperature profile assessment of thick walled components**

(57)     The invention refers to an improved method, a system and a computer program product (CPP), which, based on at least one acquired fluid temperature ($T_{fluid}$), allow a fast computation respectively a fast monitoring of temperatures profiles (TP) of thick walled components (TWC). A computer unit (CU) collects temperature signal data, corresponding to an acquired fluid temperature ($T_{fluid}$). Based on said temperature signal data, said computer program product (CPP) computes a temperature derivative estimation ($\frac{\partial T_{new}}{\partial t}$), with respect to time (t) of a temperature of the thick walled component (TWC). Said computer program product (CPP) discretises said temperature derivative estimation ($\frac{\partial T_{new}}{\partial t}$) and solves a system of m ordinary differential equations resulting in a known temperature derivative estimation ($\frac{\partial T_{new}}{\partial t}$). Said computer program product (CPP) computes said known temperature derivative estimation ($\frac{\partial T_{new}}{\partial t}$) in a computation of a temperature diffusion law. Said computer program product (CPP) solves a system of m*n algebraic equations with respect to radius (r) and length (z) of the thick walled component (TWC) for obtaining a first variant of a temperature profile (TP) and/or said computer program product (CPP) solves m systems of n algebraic equations with respect to radius (r) of the thick walled component (TWC) for obtaining a second variant of a temperature profile (TP).

Figure 3

Printed by Jouve, 75001 PARIS (FR)

**Description**

The invention relates to a method, a system and a computer program product accordingly to the definition of the claims.

Examples of thick walled components are turbine rotors, casings and the like of power plants. Such components are exposed to high loading rates, these loading rates cause thermal shocks, which may lead to component failures. In order to prevent such component failures and to increase the power plant efficiency, the assessment of the temperature stress of thick walled power plant components is crucial.

Methods for direct or indirect temperature measurements of thick walled components are numerous. Due to the development of modern computers, there exist several mathematical methods for assessing these temperatures to a high degree of accuracy. For example, document VGB Kraftwerkstechnik 68, booklet 2, February 1988, pages 182-186 discloses a method, where surface temperature values of a component are acquired in a non-destructive manner by means of a thermocouple and computed in order to obtain a temperature profile across the thick walled component.

Unfortunately, these known methods are mostly based on calculations for solving a high number of partial differential equations, and thus, are not fast enough to compute temperature values on-line, i.e., in real time respectively at affordable costs.

Moreover, no software is available for fast monitoring temperature profiles of thick walled components, which would improve the profitable operation and control of power plants. Such software is desired and would provide a competitive advantage in supply of automation products for power plants.

The present invention is intended to provide an improved method, a system and a computer program product, which, based on acquired temperatures, allows a fast computation respectively a fast monitoring of temperatures profiles of thick walled components. Said method, system and computer product program should be compatible with known and proven standards and techniques in the industry, especially with the power plant engineering science and the computer science.

To this end, the present invention provides a method, a system and a computer program product accordingly to the definition of the claims.

The invention refers to an improved method, an assessment system and a computer program product, which, based on at least one acquired fluid temperature, allow a fast computation respectively a fast monitoring of temperatures profiles of thick walled components.

In a step, a computer unit collects temperature signal data, corresponding to at least one acquired fluid temperature.

In a first inventive step, based on said temperature signal data, the computer program product estimates the derivative with respect to time of the component temperature. In order to achieve that, the computer program product discretises, preferably along the component length, certain version of the partial differential equations which describe the component temperature distribution, and and solves a set of ordinary differential equations..

In a second inventive step, the computer program product calculates a temperature profile based on said known temperature derivative estimation. By using a temperature diffusion law, the computer program product solves $m*n$ algebraic equations with respect to radius and length of the thick walled component for obtaining a first variant of a temperature profile, and/or the computer program product solves $n$ algebraic equations with respect to radius of the thick walled component for obtaining a second variant of a temperature profile.

The novel approach described by the present invention is much faster than standard approaches. In two inventive steps, it requires $m$ ordinary differential equations and $m*n$ algebraic equations, respectively $n$ algebraic equations, instead of $m*n$ ordinary differential equations as required by standard approaches. The number of ordinary differential equations is, therefore, drastically reduced, speeding up the computation of the temperature profile. Algebraic equations can be solved efficiently and very rapidly if matrix sparsity is taken into account.

Preferred embodiments of the invention are illustrated by means of Figures 1 to 4.

Figure 1    is a schematic representation of a component, having the example embodiment of a coil,

Figure 2    is a schematic representation of how the component is divided in to a finite number of increments,

Figure 3    is a schematic representation of an example embodiment of a system, comprising a thick walled component, a thermocouple device, a computer unit and a computer program product, and

Figure 4    is an example embodiment of a computed temperature profile of a thick walled component.

Thick walled components are bodies with a volume of body material. For the purposes of the present invention we assume that the body has axial symmetry. Then the body can be described by space coordinates radius r and length z. The use of a body having axial symmetry respectively of such space coordinates is arbitrary. It is not intended that the invention is limited to such a body having axial symmetry respectively that the invention is limited to such space coordinates. For the sake of simplicity, the thick walled component will be often abreviated and simply named component.

Traditionally, the temperature assessment of a thick walled component is based on a temperature diffusion law, which describes the rate of accumulation (or depletion) of temperature within the component's volume of body material as proportional to the local curvature of the temperature gradient:

$$\frac{\partial T}{\partial t} = \alpha\left(\frac{\partial^2 T}{\partial r^2} + \frac{1}{r}\frac{\partial T}{\partial r} + \frac{\partial^2 T}{\partial z^2}\right) \qquad (1)$$

where

T    temperature of the component

t    time of the temperature of the component

$\alpha$    heat diffusivity of the component

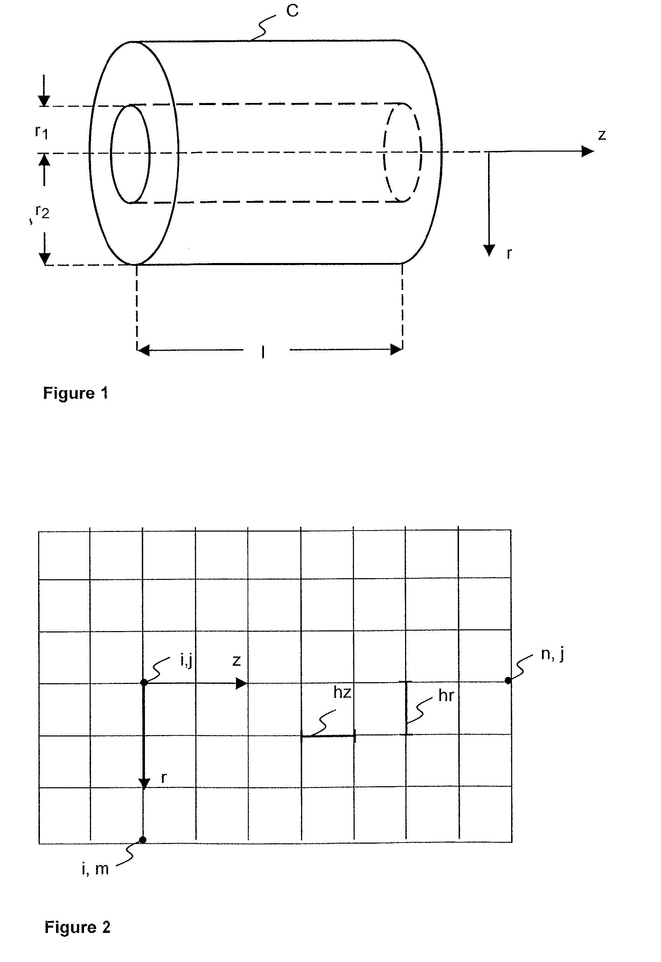

The solution of Equation 1 yields a three-dimensional temperature profile of the temperature gradient within the component's volume of body material. For the sake of simplicity, the time of the temperature of the component will be often abreviated and simply named time t. Equation 1 is a second order differential equation with respect to radius r and length z and a first order differential equation with respect to time t. Usually, Equation 1 is solved in the presence of boundary conditions. Accordingly to Figure 1, the thick walled component has an example embodiment of a hollow cylinder C of internal radius $r_1$, external radius $r_2$ and total length 1, through which a fluid such as air, steam, etc. flows. The fluid is in contact, preferably in direct contact with the component surface. Preferably, the fluid temperature $T_{fluid}$ is higher than the component temperature T. The fluid transfers, therefore, heat to the component. The heat transfer between the fluid and the component is described by a nominal heat transfer coefficient $\beta$. The heat diffusivity $\alpha$ and the nominal heat transfer coefficient $\beta$ are known material parameters. Further, assuming the component ends and the external surface to be insulated, then, the component temperature T satisfies the boundary conditions:

$$T(0,r,z) = T_0 \qquad\qquad 2$$

$$\frac{\partial T}{\partial r}\Big|_{r=r_1} = \beta(t,z)\big(T_{fluid}(t,z) - T(t,r_1,z)\big) \qquad (3)$$

$$\frac{\partial T}{\partial r}\Big|_{r=r_2} = 0 \qquad (4)$$

$$\frac{\partial T}{\partial z}\Big|_{z=0,l} = 0 \qquad (5)$$

Preferably, the set of Equations 1 to 5 is solved in a standard approach by a discretisation technique. Here we illustrate this process using a discretisation technique called "finite-differences", but clearly these ideas apply to any other discretisation methods like "finite elements", for example. Using finite differences, and accordingly to Figure 2, the derivative of the component temperature T is approximated by dividing the component's volume of body material into a grid with a finite number of elements. In direction of the length z, the space is divided in to a total number of m increments hz, with i = 1,2,..., $m \in$ N individual increments. In direction of the radius r, the space is divided in to a total number of n increments hr, with $j$ = 1,2,...,$n \in$ N individual increments. Assuming the increments hz and hr sufficiently small, the discretisation technique allows Equations 1 to 5 to be approximated by m*n ordinary differential equations,

such as:

$$\frac{dT_{i,j}(t)}{dt} = \alpha \left( \frac{T_{i+1,j} - 2T_{i,j} + T_{i-1,j}}{hz^2} + \frac{1}{r_{i,j}} \frac{T_{i,j+1} - T_{i,j-1}}{2hr} + \frac{T_{i,j+1} - 2T_{i,j} + T_{i,j-1}}{hr^2} \right) \qquad (6)$$

$$i = 1, m, \ j = 1, n.$$

Typically, the total number of increments, m and n, are of the order of 10 , resulting in a very high number of $n*m$ ($\sim 10^6$) ordinary differential equations, such that it is not possible to compute temperature values on-line, i.e., in real time and at affordable costs.

In order to speed up the temperature assessment of thick walled components, the invention presents a novel method, which is based on an estimation of a temperature derivative with respect to time. For the sake of simplicity, in the present invention, the component has the example embodiment of a coil C accordingly to Figure 1.

In a first inventive step, Equations 1 to 5 are preferably substituted by Equations 7 to 9 below and solved via discretisation.

$$\frac{\partial T_{new}}{\partial t} = \frac{\partial T_{new}}{\partial t}(t,z) = \alpha \frac{\partial^2 T_{new}(t,z)}{\partial z^2} + \beta_{new}(t,z)\left(T_{fluid}(t,z) - T_{new}(t,z)\right) \quad (7)$$

$$T_{new}(0,z) = T_0(z) \qquad (8)$$

$$\frac{\partial T_{new}}{\partial z}(t,z)\big|_{z=0,l} = 0 \qquad (9)$$

$$\beta_{new}(t,z) = \frac{\beta(t,z)}{1+k\beta(t,z)} \qquad (10)$$

where
$k$ is a coefficient computed by:

$$k = \frac{r_1}{\lambda} \left[ \frac{Y^4 \ln Y}{\left(Y^2 - 1\right)^2} - \frac{Y^2}{2\left(Y^2 - 1\right)} - \frac{1}{4} \right] \qquad (11)$$

$$Y = \frac{r_2}{r_1} \qquad (12)$$

$\lambda$          heat conductivity of the component

$\beta_{new}(t,z)$     modified heat transfer coefficient

The left hand side of Equation 7 is a temperature derivative estimation $\frac{\partial T_{new}}{\partial t}$ of a temperature estimation $T_{new}$. Said temperature derivative estimation $\frac{\partial T_{new}}{\partial t}$ is a first order differential equation with respect to time t. Preferably, the temperature estimation $T_{new}$ is a function of length z and of time t. The temperature derivative estimation $\frac{\partial T_{new}}{\partial t}$ can be approximated via discretisation and solution of a set of m ordinary differential equations, resulting in a known temperature derivative estimation $\frac{\partial T_{new}}{\partial t}(t)$. Preferably, said discretisation occurs by using finite differences, i.e. by assuming a total number of m increments hz in direction of the length z accordingly to Figure 2.

In a second inventive step, said known temperature derivative estimation $\frac{\partial T_{new}}{\partial t}(t)$ is substituted in Equation 1 to obtain a first variant of a temperature profile of a component:

$$\frac{\partial T_{new}}{\partial t}(t) = \alpha\left(\frac{\partial^2 T(t,z,r)}{\partial r^2} + \frac{1}{r}\frac{\partial T(t,z,r)}{\partial r} + \frac{\partial^2 T(t,z,r)}{\partial z^2}\right) \tag{13}$$

$$\frac{\partial T(t,z,r)}{\partial r}\Big|_{r=r_1} = \beta(t,z)\left(T_{fluid}(t,z) - T(t,r_1,z)\right) \tag{14}$$

$$\frac{\partial T}{\partial r}(t,z,r)\Big|_{r=r_2} = 0 \tag{15}$$

$$\frac{\partial T}{\partial z}(t,z,r)\Big|_{z=0,l} = 0 \tag{16}$$

Preferably, and accordingly to Figure 2, the space is divided in direction of the radius r in to n increments hr. In direction of the length z, the space is divided in to m increments hz. Assuming the increments h sufficiently small, Equations 13 to 16 are approximated by m*n algebraic equations such as:

$$\frac{\partial T_{new}}{\partial t}(t,i) = \alpha\left(\frac{T_{i+1,j} - 2T_{i,j} + T_{i-1,j}}{hz^2} + \frac{1}{r_{i,j}}\frac{T_{i,j+1} - T_{i,j-1}}{2hr} + \frac{T_{i,j+1} - 2T_{i,j} + T_{i,j-1}}{hr^2}\right) \tag{17}$$

Alternatively to said first variant of substitution, said known temperature derivative estimation $\frac{\partial T_{new}}{\partial t}(t)$ is substituted in Equation 1 by eliminating the dependence on the length z to obtain a second variant of a temperature profile of a component:

$$\beta_{new}(t,z)\left(T_{fluid}(t,z) - T_{new}(t,z)\right) = \alpha\left(\frac{\partial^2 T(t,z,r)}{\partial r^2} + \frac{1}{r}\frac{\partial T(t,z,r)}{\partial r}\right) \tag{18}$$

$$\frac{\partial T}{\partial r}\Big|_{r=r_1} = \beta(t,z)\left(T_{fluid}(t,z) - T(t,r_1,z)\right) \tag{19}$$

$$\frac{\partial T}{\partial r}\Big|_{r=r_2} = 0 \tag{20}$$

Note, that the left hand side of Equation 18 is a known function of time t and length z. Preferably, and accordingly to Figure 2, the space is divided in direction of the radius r in to a finite number of n increments hr. Assuming the increments hr sufficiently small, Equations 18 to 20 are approximated (for each j=1,...,m) by n algebraic equations such as:

$$20 \quad \beta_{new}(t,i)\big(T_{fluid}(t,i) - T_{new}(t,i)\big) = \alpha\left( \frac{T_{i,j+1} - 2T_{i,j} + T_{i,j-1}}{hr^2} + \frac{1}{r_{i,j}} \frac{T_{i,j+1} - T_{i,j-1}}{2hr} \right) \qquad (21)$$

Therefore, both variants of substitution produce a set of linear equations with respect to a component temperature $T_{i,j}$, which can be solved on-line, i.e., in real time and at affordable costs using standard numerical methods.

The first variant of substitution accordingly to Equation 17 produces a system of m*n algebraic equations, while the second variant of substitution accordingly to Equation 21 produces m systems of n algebraic equations. The first variant of substitution accordingly to Equation 17 requires a higher number of mathematical operations than the second variant of substitution accordingly to Equation 21 and is, therefore, faster to solve. This is due to the induced sparsity. Equation 17 depends on both space coordinates, the radius r and the length z, while Equation 21 depends solely on the radius r. The faster to solve Equation 21 is less precise then Equation 17.

The approach described by the present invention is much faster than standard approaches, because the set of m ordinary differential equations to be derived from Equation 7 is of an order of magnitude smaller than the set of m*n ordinary differential equations accordingly to Equation 6. Based on Figure 2, and by assuming a number of $10^3$ increments for each space coordinate direction, i.e. in direction of the radius r and of the length z, then the approach described by the present invention requires in a first step $10^3$ ordinary differential equations to solve Equation 7 and in a second step solving a system of $10^3 * 10^3$ algebraic equations to find the solution of Equation 17, respectively $10^3$ systems of 10 algebraic equations to find the solution of Equation 21, instead of $10^3 * 10^3$ ordinary differential equations as required by the standard approach to solve Equation 6.

Although the novel method has been described as having two inventive steps, this does not mean that these steps must be executed separately in time and space. These steps can be implemented in an incremental fashion, where the assessment of the first and second step is redone after each temperature assessment. One skilled in the art would recognize that there are other possible combinations of these steps, which still express the same essential method.

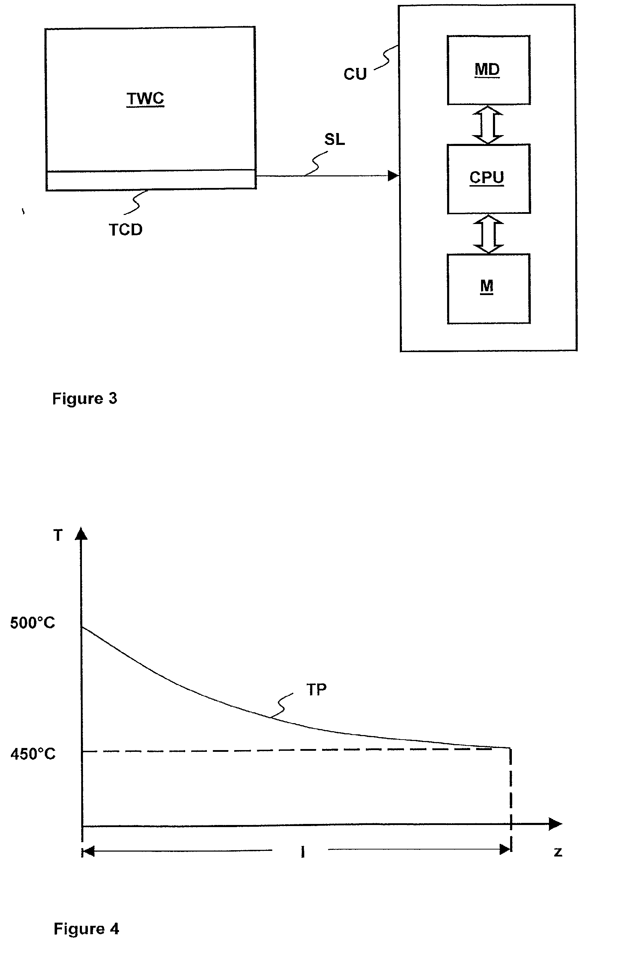

The above novel method is to be implemented in a computer unit by means of a computer program product and can be used for temperature monitoring of critical thick walled components like turbine rotors and casings of power plants. Figure 3 shows of an example embodiment of an assessment system, consisting of a thick walled component TWC, at least one thermocouple device TCD, at least one computer program product CPP and at least one computer unit CU. The thick walled component TWC may be a standard stainless steel casing of a power plant. The power plant may use fluids like air or steam for energy production. The thermocouple device TCD may be a standard sensor device, placed nearby a surface of the casing for a preferably non-destructive measurement of at least one fluid temperature $T_{fluid}$.

Typically, the thermocouple device TCD measures in regular or irregular time intervals, for example every 1 sec., the fluid temperature $T_{fluid}$ and delivers a corresponding temperature signal via a signal line SL to at least one central processing unit CPU. The temperature signals may be analogue or digital temperature signal data. The central processing unit CPU is part of the computer unit CU, which may be a standard computer like a Windows personal computer or a Unix workstation, The computer unit CU comprises at least one memory device MD for storing digital temperature signal data, a monitor M for displaying data and, if necessary, an analogue-to-digital temperature signal converter (not shown in Figure 3) for converting analogue temperature signal data to digital temperature signal data.

A computer program product CPP is implemented on said computer unit CU and may be stored in the memory device MD. Upon loading of the computer program product CPP in to the central processing unit CPU of the computer unit CU, in a first inventive step, temperature signal data, which correspond to an acquired fluid temperature $T_{fluid}$, are computed by at least one software code. Preferably, a temperature derivative estimation $\frac{\partial T_{new}}{\partial t}$ of a temperature estimation $T_{new}$ based on Equation 7 is computed. Preferably, said temperature derivative estimation $\frac{\partial T_{new}}{\partial t}$ is discretised in direction of length z of the thick walled component TWC, resulting in a set of m ordinary differential equations. By solving said set of m ordinary differential equations, the software code provides a known temperature derivative estimation $\frac{\partial T_{new}}{\partial t}$ for the thick walled component TWC at a time t and in direction of the length z. The known temperature derivative estimation $\frac{\partial T_{new}}{\partial t}$ may be stored in a memory device MD.

In a second inventive step, said known temperature derivative estimation $\frac{\partial T_{new}}{\partial t}$ is computed by at least one software code of the computer program product CPP to obtain a first variant of a temperature profile TP of a component approximated by a system of m*n algebraic equations, preferably based on Equation 17, and/or by at least one software code of the computer program product CPP to obtain a second variant of a temperature profile TP of a component approximated by m systems of n algebraic equations, preferably based on Equation 21. By solving said system of m*n algebraic equations accordingly to Equation 17, respectively by solving said m systems of n algebraic equations accordingly to Equation 21, the software code provides at least one temperature profile TP of the thick walled component TWC.

Said temperature profile TP may be stored in a memory device MD and/or displayed on the monitor M. This monitoring of a temperature profile TP of a thick walled component TWC occurs preferably in real time and improves the profitable operation and control of power plants. Figure 4 shows an example embodiment of such a temperature profile TP of a thick walled component TWC. A software which comprises said computer program product represents, thus, a competitive advantage in supply of automation products for power plants.

Although the present invention has been described in terms of various embodiments, it is not intended that the invention is limited to these embodiments. Modification within the spirit of the invention will be apparent to those skilled in the art. For example, the thick walled component having the example embodiment of a coil C accordingly to Figure 1 may have another shape such as sphere, a plate, or more precisely, may have the shape of a turbine rotor or casing. By using another shape of the component, the formulas, especially Equations 10 to 12 must be adapted. This holds in particular for the modified heat transfer coefficient $\beta_{new}(t,z)$ accordingly to Equation 10, which contains information about the three-dimensional shape of the component.

**List of reference signs**

| 1 to 21 | Equations |
|---|---|
| $\alpha$ | heat diffusivity of the component |
| $\beta$ | nominal heat transfer coefficient |
| $\beta_{new}$ | modified heat transfer coefficient |
| C | hollow cylinder |
| CPP | computer program product |
| CU | computer unit |
| hz | increment in coordinate direction z |
| hr | increment in coordinate direction r |
| i,j | individual increments |
| k | coefficient |
| l | total length of the cylinder |
| m, n | total number of increments hz, and hr, respectively |
| M | monitor |
| MD | memory device |
| r | radius |
| $r_1$ | internal radius of a hollow cylinder C |
| $r_2$ | external radius of a hollow cylinder C |
| SL | signal line |
| t | time of the temperature of the component |
| T | temperature of the component |
| $T_{fluid}$ | fluid temperature |
| $T_{new}$ | temperature estimation |
| $\frac{\partial T_{new}}{\partial t}$ | temperature derivative estimation |
| TP | temperature profile |
| TWP | thick walled component |
| Y | $\frac{2}{r}$ |
| z | length |

**Claims**

1. A method for computation of a temperature profile (TP) of a thick walled component (TWC), comprising the steps of:

   - acquiring at least one fluid temperature ($T_{fluid}$) of a fluid being in contact with the thick walled component (TWC), whereby,
   inputting temperature signal data, corresponding to an acquired fluid temperature ($T_{fluid}$) in a computation of a temperature derivative estimation ($\frac{\partial T_{new}}{\partial t}$) with respect to time (t) of a temperature of the thick walled component (TWC),

- discretising said temperature derivative estimation ($\frac{\partial T_{new}}{\partial t}$) and solving a system of m ordinary differential equations preferably with respect to length (z) of the thick walled component (TWC), resulting in a known temperature derivative estimation ($\frac{\partial T_{new}}{\partial t}$),

- inputting said known temperature derivative estimation ($\frac{\partial T_{new}}{\partial t}$) in a computation of a temperature diffusion law,

- solving a system of m*n algebraic equations with respect to radius (r) and length (z) of the thick walled component (TWC) for obtaining a temperature profile (TP) and/or

- solving m systems of n algebraic equations with respect to radius (r) of the thick walled component (TWC) for obtaining a temperature profile (TP).

2. The method of claim 1, wherein the temperature derivative estimation $\frac{\partial T_{new}}{\partial t}$ is based on:

$$\frac{\partial T_{new}}{\partial t} = \alpha \frac{\partial^2 T_{new}(t,z)}{\partial z^2} + \beta_{new}(t,z)\left(T_{fluid}(t,z) - T_{new}(t,z)\right) \qquad (7)$$

where

$T_{new}(t,z)$    temperature of the thick walled component for a radius $r_3$ at a time t and a length z,
$\beta_{new}(t,z)$    modified heat transfer coefficient of a thick walled component at a time t and a length z.

3. The method of claim 1 or 2, wherein said known temperature derivative estimation ($\frac{\partial T_{new}}{\partial t}(t)$) is put in a temperature diffusion law based on:

$$\frac{\partial T}{\partial t} = \alpha\left(\frac{\partial^2 T}{\partial r^2} + \frac{1}{r}\frac{\partial T}{\partial r} + \frac{\partial^2 T}{\partial z^2}\right) \qquad (1)$$

where

T    temperature of the thick walled component (TWC),
$\alpha$    heat diffusivity of the thick walled component (TWC).

4. The method of one of claims 1 to 3, wherein said temperature profile (TP) is obtained by solving a system of m*n algebraic equations:

$$\frac{\partial T_{new}}{\partial t}(t,i) = \alpha\left(\frac{T_{i+1,j} - 2T_{i,j} + T_{i-1,j}}{hz^2} + \frac{1}{r_{i,j}}\frac{T_{i,j+1} - T_{i,j-1}}{2hr} + \frac{T_{i,j+1} - 2T_{i,j} + T_{i,j-1}}{hz^2}\right)$$

$$(17)$$

and/or by solving m systems of n algebraic equations:

$$\beta_{new}(t,i)\left(T_{fluid}(t,i)-T_{new}(t,i)\right)=\alpha\left(\frac{T_{i,j+1}-2T_{i,j}+T_{i,j-1}}{hr^2}+\frac{1}{r_{i,j}}\frac{T_{i,j+1}-T_{i,j-1}}{2hr}\right)$$

$$(21)$$

**5.** The method of claim one of claims 1 to 4, wherein, the temperature profile (TP) is computed on-line by a computer unit (CU) respectively displayed on-line on a monitor (M).

**6.** A assessment system comprising a thick walled component (TWC), a thermocouple device (TCD), a computer unit (CU) for running a computer program product (CPP), whereby

- said thermocouple device (TCD) acquires at least one fluid temperature ($T_{fluid}$) of a fluid being in contact with the thick walled component (TWC),

- said computer unit (CU) collects temperature signal data, corresponding to an acquired fluid temperature ($T_{fluid}$),

- based on said temperature signal data, said computer program product (CPP) computes a temperature derivative estimation ($\frac{\partial T_{new}}{\partial t}$) with respect to time (t) of a temperature of the thick walled component (TWC),

- said computer program product (CPP) discretises said temperature derivative estimation ($\frac{\partial T_{new}}{\partial t}$) and solves a system of m ordinary differential equations preferably with respect to length (z) of the thick walled component (TWC), resulting in a known temperature derivative estimation ($\frac{\partial T_{new}}{\partial t}$),

- said computer program product (CPP) computes said known temperature derivative estimation ($\frac{\partial T_{new}}{\partial t}$) in a computation of a temperature diffusion law,

- said computer program product (CPP) solves a system of m*n algebraic equations with respect to radius (r) and length (z) of the thick walled component (TWC) for obtaining a first variant of a temperature profile (TP) and/or

- said computer program product (CPP) solves m systems of n algebraic equations with respect to radius (r) of the thick walled component (TWC) for obtaining a second variant of a temperature profile (TP).

**7.** The system of claim 6, wherein the temperature derivative estimation $\frac{\partial T_{new}}{\partial t}$ is based on:

$$\frac{\partial T_{new}}{\partial t}=\alpha\frac{\partial^2 T_{new}(t,z)}{\partial z^2}+\beta_{new}(t,z)\left(T_{fluid}(t,z)-T_{new}(t,z)\right) \qquad (7)$$

where

$T_{new}(t,z)$ estimation of the temperature of the thick walled component at a time t and a length z,
$\beta_{new}(t,z)$ modified heat transfer coefficient of a thick walled component at a time t and a length z.

**8.** The method of claim 6 or 7, wherein said said computer program product (CPP) computes said temperature diffusion law based on:

$$\frac{\partial T}{\partial t}=\alpha\left(\frac{\partial^2 T}{\partial r^2}+\frac{1}{r}\frac{\partial T}{\partial r}+\frac{\partial^2 T}{\partial z^2}\right) \qquad (1)$$

where

T     temperature of the thick walled component (TWC),
$\alpha$     heat diffusivity of the thick walled component (TWC).

**9.** The system of one of claims 6 to 8, wherein said temperature profile (TP) is based on a system of m*n algebraic equations:

$$\frac{\partial T_{new}}{\partial t}(t,i) = \alpha\left(\frac{T_{i+1,j} - 2T_{i,j} + T_{i-1,j}}{hz^2} + \frac{1}{r_{i,j}}\frac{T_{i,j+1} - T_{i,j-1}}{2hr} + \frac{T_{i,j+1} - 2T_{i,j} + T_{i,j-1}}{hz^2}\right)$$

(17)

and/or based on m systems of n algebraic equations:

$$\beta_{new}(t,i)\left(T_{fluid}(t,i) - T_{new}(t,i)\right) = \alpha\left(\frac{T_{i,j+1} - 2T_{i,j} + T_{i,j-1}}{hr^2} + \frac{1}{r_{i,j}}\frac{T_{i,j+1} - T_{i,j-1}}{2hr}\right)$$

(21)

**10.** The system of one of claims 6 to 9, wherein the temperature profile (TP) is computed on-line by said computer unit (CU) respectively displayed on-line on a monitor (M).

**11.** A computer program product (CPP) loadable in to a memory device (MD) of a computer unit (CU) for computing the computation steps of one of claims 1 to 5.

**12.** Use of the method of one of claims 1 to 5 for temperature monitoring of critical thick walled components (TWC) like turbine rotors and casings of power plants.

**Figure 1**

**Figure 2**

**Figure 3**

**Figure 4**

**European Patent Office**

**EUROPEAN SEARCH REPORT**

Application Number

EP 01 81 0731

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 85 02905 A (BABCOCK WERKE AG) 4 July 1985 (1985-07-04) * the whole document * | 1-12 | G01K7/02 G01K3/10 G01N25/20 |
| A | US 4 896 281 A (MACK RUSSEL T) 23 January 1990 (1990-01-23) * the whole document * | 1-12 | |
| A | US 4 516 864 A (KIM WONTAIK ET AL) 14 May 1985 (1985-05-14) * claim 1 * | 1-12 | |

TECHNICAL FIELDS SEARCHED (Int.Cl.7)

G01K
G01N

The present search report has been drawn up for all claims

| Place of search | Date of completion of the search | Examiner |
|---|---|---|
| MUNICH | 29 October 2001 | Thomte, M |

EPO FORM 1503 03.82 (P04C01)

## ANNEX TO THE EUROPEAN SEARCH REPORT
## ON EUROPEAN PATENT APPLICATION NO.

EP 01 81 0731

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2001

| Patent document cited in search report | | Publication date | Patent family member(s) | | Publication date |
|---|---|---|---|---|---|
| WO 8502905 | A | 04-07-1985 | DE | 3346579 A1 | 11-07-1985 |
| | | | DK | 380685 A | 22-08-1985 |
| | | | WO | 8502905 A1 | 04-07-1985 |
| | | | EP | 0167576 A1 | 15-01-1986 |
| | | | JP | 61500868 T | 01-05-1986 |
| US 4896281 | A | 23-01-1990 | EP | 0203673 A2 | 03-12-1986 |
| US 4516864 | A | 14-05-1985 | NONE | | |

EPO FORM P0459

For more details about this annex : see Official Journal of the European Patent Office, No. 12/82